# EUROPÄISCHE PATENTSCHRIFT

(11) **EP 3 161 338 B1**
(45) Veröffentlichungstag und Bekanntmachung des Hinweises auf die Patenterteilung: **27.06.2018**
(21) Anmeldenummer: 15730069.0
(22) Anmeldetag: 30.03.2015
(51) Int. Cl.: F16D 3/223

(54) **KUGELVERSCHIEBEGELENK MIT SICH KREUZENDEN LAUFBAHNEN MIT UNTERSCHIEDLICHEM SCHRÄGUNGSWINKEL UND MINDESTRADIALABSTAND**
BALL SLIDING JOINT HAVING CROSSING RACEWAYS HAVING A DIFFERENT ANGLE OF INCLINATION AND A MINIMUM RADIAL DISTANCE
JOINT COULISSANT À BILLES À CHEMINS DE ROULEMENT CROISÉS AYANT DES ANGLES D'INCLINAISON DIFFÉRENTS ET DES DISTANCES RADIALES MINIMALES DIFFÉRENTES

(30) Priorität: 26.06.2014 DE 102014212366
(43) Veröffentlichungstag der Anmeldung: 03.05.2017
(73) Patentinhaber: Neapco Europe GmbH, 52351 Düren (DE)
(72) Erfinder: LOHMBERG, Peter, 51145 Köln (DE); WOJCIECHOWSKI, Mateusz, 52070 Aachen (DE); HOEKS, Luis, 52249 Eschweiler (DE); ELING, Michael, 51109 Köln (DE); MUNTIMADUGU, Subramanyam, 50226 Frechen (DE)
(74) Vertreter: Lohmanns, Bernard
(86) Internationale Anmeldenummer: PCT/EP2015/056897
(87) Internationale Veröffentlichungsnummer: WO 2015/197205

(56) Entgegenhaltungen:
- WO-A1-2011/038719
- DE-A1- 10 220 712
- DE-A1-102004 062 843
- US-A1- 2010 292 016

## Beschreibung

Die vorliegende Erfindung betrifft ein Kugelverschiebegelenk mit einem Gelenkaußenteil und einem Gelenkinnenteil, wobei sich die Kugellaufbahnen des Gelenkaußenteils und des Gelenkinnenteils einander paarweise gegenüber liegen und jeweils entgegengesetzte Schrägungswinkel aufweisen (engl. Cross Groove oder kurz CG). Wechseln sich jeweils Kugellaufbahnen mit unterschiedlichen Schrägungswinkel ab, erhält man ein Kugelverschiebegelenk mit sich alternierend kreuzenden Kugellaufbahnen (engl.: alternate angle Cross Groove oder kurz aCG).
Gleichlaufgelenke der Bauart CG (Cross Groove) sind bereits bekannt. Die Laufbahnen verlaufen unter einem Winkel zur Rotationsachse. Zwei benachbarte Laufbahnen haben einen theoretischen Schnittpunkt. Moderne Kraftfahrzeuge zeichnen sich unter anderem durch geringe Geräuschpegel im Innenraum und durch geringe Vibrationen bei der Fahrt aus. Fahrbahnunebenheiten sowie durch den Antriebstrang induzierte Schwingungen werden auf ein Minimum reduziert. Erreicht wird dies zum einen durch Entkopplung, Dämpfung und den Einsatz schwingungstechnisch optimiert, aufeinander abgestimmter Systeme. Zum anderen soll dabei jede einzelne Baugruppe selbst eine möglichst geringe Unruhe erzeugen. Die in den Antriebswellen eingesetzten Gelenke können durch ihre Eigenschaften wesentlich zur Anregung der unerwünschten Vibrationen der Fahrzeuge beitragen.
Eine Variante, bei der benachbarte Laufbahnwinkel unterschiedlich gestaltet sind, ist jeweils aus US8070611B2, US7347786B2 und DE102004062843A1 bekannt. Bei diesen "Cross-Straight" Gleichlaufgelenken verläuft eine Laufbahn unter Ausbildung eines theoretischen Schnittpunkts mit der Rotationsachse oder parallel zu dieser Rotationsachse. Es liegt somit deren Verlauf jeweils in einer gemeinsamen Ebene mit der jeweiligen Drehachse.
Vor diesem Hintergrund liegt der vorliegenden Erfindung die Aufgabe zugrunde, ein Kugelverschiebegelenk bereit zu stellen, welches im Betrieb kleine Verschiebekräfte erzeugt und/oder gleichzeitig sehr effizient ist und/oder sich durch eine vergleichsweise hohe Laufruhe auszeichnet.

Diese Aufgabe wird gelöst durch ein Kugelverschiebegelenk mit den Merkmalen des Anspruch 1. Weitere Vorteile und Merkmale der Erfindung ergeben sich aus den Unteransprüchen. Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Ein erfindungsgemäßes Kugelverschiebegelenk umfasst ein Gelenkaußenteil mit einem Innenumfang und geschrägten Kugellaufbahnen, die an dem Innenumfang des Gelenkaußenteils ausgebildet sind. Die Kugellaufbahnen sind um eine Drehachse des Gelenkaußenteils angeordnet. Der Innenumfang definiert im Wesentlichen den zur Drehachse senkrechten Schnitt durch eine Innenfläche des Gelenkaußenteils. Beispielsweise umfasst das Gelenkaußenteil einen dickwandigen Hohlkörper und die Kugellaufbahnen sind als rinnenförmige Einkerbungen in seiner Innenfläche in Richtung der langen Achse des Hohlkörpers ausgebildet. Der Innenumfang im Sinne der Erfindung bezieht sich dann auf den Innenumfang des Hohlkörpers ohne Berücksichtigung der Einkerbungen.

Erfindungsgemäß umfasst das Kugelverschiebegelenk weiter ein Gelenkinnenteil mit einem Außenumfang und geschrägten, insbesondere rinnenförmigen, Kugellaufbahnen, die an dem Außenumfang des Gelenkinnenteils ausgebildet sind. Die Kugellaufbahnen sind um eine Drehachse des Gelenkinnenteils angeordnet. Der Außenumfang definiert im Wesentlichen den zur Drehachse senkrechten Schnitt durch eine Außenfläche des Gelenkinnenteils. Beispielsweise umfasst das Gelenkinnenteil einen dickwandigen Hohlkörper, und die Kugellaufbahnen sind als Einkerbungen in der Außenfläche des Hohlkörpers ausgebildet. Der Außenumfang im Sinne der Erfindung bezieht sich dann auf den Außenumfang des Hohlkörpers ohne Berücksichtigung der Einkerbungen.

Mit geschrägten Kugellaufbahnen im Sinne der Erfindung ist gemeint, dass bei einer senkrechten Projektion der Kugellaufbahn auf eine Ebene, in der die Drehachse liegt, diese Projektion der Kugellaufbahn die Drehachse unter einem Winkel schneidet. Der Winkel, unter dem die Projektion der Kugellaufbahn die Drehachse schneidet, wird im weiteren Verlauf als "Schrägungswinkel" bezeichnet. Wobei der Schrägungswinkel bei der erfindungsgemäß gekrümmten Bahn mittels einer Linie definiert wird, die die beiden Endpunkte der Kugellaufbahnen verbindet. Der Winkel unter dem die senkrechte Projektion dieser Linie in eine die Drehachse beinhaltende Ebene die Drehachse schneidet wird hierfür als Schrägungswinkel angesehen. Die Kugellaufbahnen sind also aus einer zur Drehachse achsparallelen Lage verdreht.

Sowohl die Kugellaufbahnen des Gelenkaußenteils als auch die Kugellaufbahnen des Gelenkinnenteils liegen einander paarweise gegenüber und weisen jeweils entgegengesetzte Schrägungswinkel auf. Durch die geschrägten Kugellaufbahnen wird eine bessere Laufruhe und höhere Verschleißfestigkeit des Kugelverschiebegelenks bewirkt. Jedes derart ausgebildete Kugellaufbahnpaar weist erfindungsgemäß eine zugehörige Kugel auf. Bevorzugt beträgt die Anzahl der Kugeln und entsprechend die Anzahl der Kugellaufbahnpaare wenigsten drei, besonders bevorzugt handelt es sich um eine gerade Anzahl von Kugeln, bevorzugt 6 oder 8 Kugeln. Weiter umfasst das Kugelverschiebegelenk einen Käfig, der zwischen dem Gelenkaußenteil und dem Gelenkinnenteil angeordnet ist. Der Käfig weist Fenster auf, die zur Aufnahme der Kugeln dienen.

Erfindungsgemäß weisen das Gelenkaußenteil und das Gelenkinnenteil jeweils mindestens zwei Gruppen von geschrägten Kugellaufbahnen auf, die sich in Bezug auf den Betrag des Schrägungswinkels zu der jeweiligen Drehachse unterscheiden. Die erste Gruppe von Kugellaufbahnen schließt einen Schrägungswinkel α mit der jeweiligen Drehachse ein und eine zweite Gruppe von Kugellaufbahnen schließt einen Schrägungswinkel β mit der jeweiligen Drehachse ein, so dass sich die Kugellaufbahnen der beiden Gruppen von Kugellaufbahnen kreuzen. Die Kugellaufbahnen einer Gruppe sind zueinander parallel angeordnet. Der Verlauf der Kugellaufbahn ergibt sich durch die Konstruktionslinie, die die Scheitelpunkte also die bezogen auf das jeweilige Gelenkteil tiefsten Punkte der Kugellaufbahnen beschreiben und damit die Bewegung der in den Kugellaufbahn jeweils abrollenden Kugel vorgeben.

Für die Beträge der Schrägungswinkel der Kugellaufbahnen des Gelenkaußenteils und des Gelenkinnenteils gilt erfindungsgemäß, dass der Schrägungswinkel α der ersten Gruppe vom Betrag geringer ausfällt als der Betrag des Schrägungswinkels β der zweiten Gruppe. Bevorzugt gilt für die Beträge 1 > α/β ≥ 0,075. Noch bevorzugter gilt 1 > α/β ≥ 0,1.

Erfindungsgemäß ist vorgesehen, dass der minimale Radialabstand r_{α} der Kugellaufbahnen der ersten Gruppe mit dem Schrägungswinkel α sich von dem minimalen Radialabstand r_{β} der Kugellaufbahnen der zweiten Gruppe mit dem Schrägungswinkel β unterscheidet. Der Begriff minimale Radialastand ist so zu verstehen, dass der jeweilige sich durch den Verlauf der Kugellaufbahnen ergebende minimale Abstand zwischen der betreffenden Drehachse entscheidend ist. Beispielsweise ergibt sich ein minimaler Radialabstand wenn die betreffenden Kugellaufbahnen einer Gruppe, bzw. deren Konstruktionslinien, nicht auf einer die jeweilige Drehachse umgebenden Zylinderfläche liegend angeordnet sind, sondern lediglich einen Berührpunkt mit einer durch den minimalen Radialabstand definierten Zylinderfläche bilden, weil sie jeweils beispielsweise auf einer Tangentialebene zu dem vorgenannten Zylinder liegen, oder anders ausgedrückt die Drehachse parallel zu einer Ebene ist, in der die jeweilige Kugellaufbahn liegt.

Bevorzugt ist jedoch vorgesehen, dass die betreffenden Kugellaufbahnen wenigstens einer oder aller Gruppen, d.h. deren Konstruktionslinien, jeweils in einer Tangentialebene einer Zylinderfläche mit dem minimalen Radialabstand um die Drehachse liegend angeordnet sind. Bevorzugt sind die Kugellaufbahnen der betreffenden Gruppe als zueinander parallele Tangenten an eine gemeinsame, die jeweilige Drehachse mit dem minimalen Radialabstand umgebende Zylinderfläche definiert. Zur Verdeutlichung sei angeführt, dass sich bei jeweils minimalen Radialabständen r_{α}, r_{β} der Kugellaufbahnen jeweils die Mantelfläche eines Kreiszylinders durch die Kugellaufbahnen einer Gruppe konstruieren lässt. Der Radius der Grundflächen der Zylinder entspricht dann jeweils dem Radialabstand r_{α} beziehungsweise r_{β} der zugehörigen Kugellaufbahnen. Dies bedeutet insbesondere, dass der Radius r_{α} der Grundfläche des ersten Kreiszylinders größer ist als der Radius r_{β} der Grundfläche des zweiten Kreiszylinders.

Durch den Radialsprung ist es möglich, das Gelenkvolumen effektiver zu nutzen. Darüber hinaus ergibt sich aufgrund des Radialsprungs eine unterschiedliche Drehmomentübertragung pro Gruppe, was vorteilhaft bei der konstruktiven Auslegung der Bahnen genutzt werden kann.

Gemäß einer bevorzugten Variante ist vorgesehen, dass der gegebenenfalls minimale, erste Radialabstand r_{α} der ersten Gruppe größer ist als der gegebenenfalls minimale, zweite Radialabstand r_{β} der zweiten Gruppe. Es gilt also r_{α} > r_{β}, wobei für die Beträge der Schrägungswinkel gilt: α < β. Die Unruhe eines Kugelverschiebegelenks wird wesentlich durch das Drehmoment der Kugeln beeinflusst. Das Verschiebegelenk wird insgesamt belastbarer.

Bevorzugt ist die Anzahl der Kugellaufbahnen der ersten Gruppe gleich der Anzahl der Kugellaufbahnen der zweiten Gruppe.

Bevorzugt sind die Kugellaufbahnen derart angeordnet, dass sich benachbarte Kugellaufbahnen in einem theoretischen, d.h. imaginären, Punkt kreuzen. Mit benachbarten Kugellaufbahnen im Sinne der Erfindung sind Kugellaufbahnen gemeint, die in Umfangsrichtung des Gelenkinnenteils, beziehungsweise des Gelenkaußenteils unmittelbar nebeneinander liegen. Das bedeutet benachbarte Kugellaufbahnen sind um unterschiedliche Winkel relativ zu ihrer achsparallelen Lage verdreht. Beispielsweise sind benachbarte Kugellaufbahnen um unterschiedliche Winkel im Uhrzeigersinn zu ihrer achsparallelen Lage verdreht. Gemäß einer vorteilhaften Ausgestaltung wechselt in Umfangsrichtung das Vorzeichen des Schrägungswinkels von Kugellaufbahn zu Kugellaufbahn. Bevorzugt haben die Schrägungswinkel α einer ersten Gruppe und β einer zweiten Gruppe unterschiedliche Vorzeichen und es wechseln sich die Kugellaufbahnen der ersten und zweiten Gruppe in Umfangsrichtung ab.

Gemäß einer bevorzugten Ausgestaltung liegt der Betrag der Differenz aus dem minimalsten Radialabstand der ersten Gruppe und dem minimalsten Radialabstand der zweiten Gruppe zwischen 0,01 mm und 10,00 mm, bevorzugt liegt er zwischen 0,10 mm und 1,00 mm.

Bevorzugt ist der Schrägungswinkel β (Beta) so gewählt, dass er wenigstens einem halben Beugewinkel entspricht, um den das Gelenkaußenteil zu dem Gelenkinnenteil gelenkig verschwenkbar ist. Wobei der Beugewinkel im Sinne der Erfindung der Anwinkelung des Gelenkinnenteils aus der gestreckten bzw. koaxialen Lage entspricht.

Gemäß einer weiteren Ausgestaltung des Kugelverschiebegelenks weisen die Kugellaufbahnen wenigstens einer Gruppe einen geradlinigen Verlauf auf. Gemäß einer bevorzugten Ausgestaltung weisen ausschließlich die Kugellaufbahnen der zweiten Gruppe einen geradlinigen Verlauf auf.

Gemäß einer weiteren Ausgestaltung weisen die Kugellaufbahnen wenigstens einer Gruppe einen gekrümmten Verlauf mit einem Wendepunkt 1. Ordnung auf. Beispielsweise ergibt sich ein S-förmiger Verlauf der Kugellaufbahn einer Gruppe. Bevorzugt sind ausschließlich die Kugellaufbahnen der ersten Gruppe gekrümmt aber untereinander deckungsgleich ausgebildet. Bei dem gekrümmten Verlauf der Kugellaufbahn wird der Schrägungswinkel durch eine gedachte Verbindungslinie zwischen den äußeren Endpunkten der Kugellaufbahn definiert.

Gemäß einer bevorzugten Variante ist der gekrümmte Verlauf punktsymmetrisch zum Wendepunkt 1. Ordnung.

Bevorzugt ist der gekrümmte Verlauf abschnittsweise, bevorzugt über wenigstens ein Viertel, noch bevorzugter über wenigstens ein Drittel seines Gesamtverlaufs durch einen konstanten Krümmungsradius definiert. Noch bevorzugter liegt das Verhältnis aus dem ersten Schrägungswinkel α (alpha) und dem Krümmungsradius in einem Bereich zwischen 0,0001 und 1.

Bevorzugt weist die Kugellaufbahnen einen zu ihrer Verlaufsrichtung senkrechten Querschnitt in Parabelform auf.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Figuren näher erläutert wird. In dieser Zeichnung zeigen schematisch:
- Fig. 1:: eine Gesamtansicht eins erfindungsgemäßen Kugelverschiebegelenks,
- Fig. 2:: ein Gelenkinnenteil eines erfindungsgemäßen Kugelverschiebegelenks,
- Fig. 3:: Aufsicht und Projektion von benachbarten Kugellaufbahnen einer ersten und zweiten Gruppe mit Schrägungswinkeln α und β eines Gelenkinnenteils,
- Fig. 4a:: einen Schnitt entlang einer Kugellaufbahn einer ersten Gruppe mit Radialabstand r_{α},
- Fig. 4b:: einen Schnitt entlang einer Kugellaufbahn einer zweiten Gruppe mit Radialabstand r_{β},
- Fig. 5:: Aufsicht eines Gelenkinnenteils eines erfindungsgemäßen Kugelverschiebegelenks zeigt insbesondere den Unterschied der Kugellaufbahnen bezüglich des Radialabstandes.
- Fig. 6:: eine Aufsicht auf drei Kugellaufbahnen, wobei die in dieser Abbildung außen liegenden Kugellaufbahnen einen geradlinigen Verlauf aufweisen und die zwischen diesen beiden liegende Kugellaufbahn (mittlere Kugellaufbahn) einen gekrümmten Verlauf aufweist.

In den unterschiedlichen Figuren sind hinsichtlich ihrer Funktion gleichwertige Teile stets mit denselben Bezugszeichen versehen, so dass diese in der Regel auch nur einmal beschrieben werden.

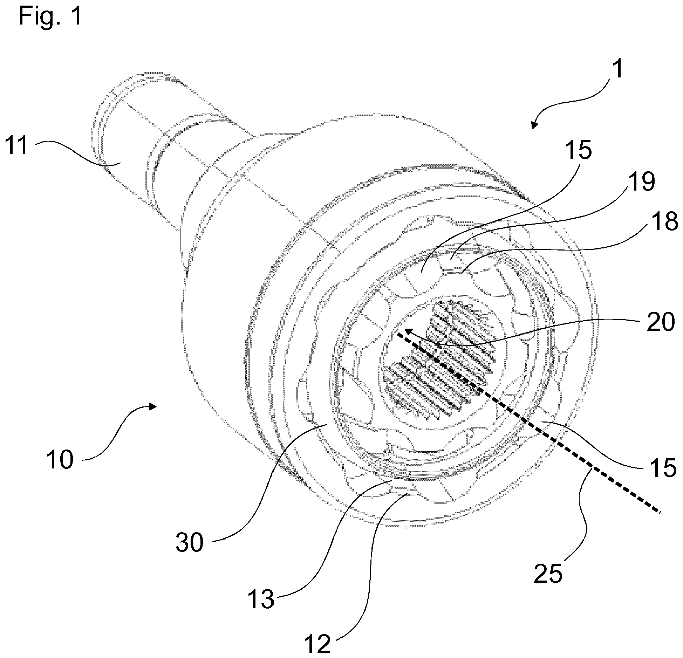

Fig. 1 zeigt eine Gesamtansicht eines erfindungsgemäßen Kugelverschiebegelenks 1 mit geschrägten Kugellaufbahnen 15. Das Kugelverschiebegelenk 1 umfasst ein Gelenkaußenteil 10, einen Käfig 30 mit Kugeln, hier nicht zu sehen, und ein Gelenkinnenteil 20, und es ist an einem Ende eines Zapfens 11 angeordnet.

Das Gelenkaußenteil 10 ist im Wesentlichen ein kreisförmiger Hohlzylinder mit einem Innenumfang 12, in dessen Innenfläche 13 acht geschrägte Kugellaufbahnen 15 ausgebildet sind. Die Kugellaufbahnen 15 erstrecken sich als Einkerbungen in der Innenfläche 13, entlang der langen Achse des kreisförmigen Hohlzylinders, um eine Drehachse 25 des Gelenkaußenteils 10.

Das Gelenkinnenteil 20 ist innerhalb des Gelenkaußenteils 10 angeordnet und ist im Wesentlichen ein kreisförmiger Hohlzylinder mit einem Außenumfang 18, der eine Außenfläche 19 definiert, in der acht geschrägte Kugellaufbahnen 15 ausgebildet sind. Die Kugellaufbahnen 15 erstrecken sich als Einkerbungen in der Außenfläche 19, entlang der langen Achse des kreisförmigen Hohlzylinders, um eine Drehachse 25 des Gelenkinnenteils 20. In der Darstellung des gestreckten Kugelverschiebegelenks 1 fällen die Drehachsen 25 des Gelenkaußenteils 10 und des Gelenkinnenteils 20 zusammen.

Zwischen dem Gelenkaußenteil 10 und dem Gelenkinnenteil 20 ist der Käfig 30 angeordnet. Der Käfig 30 ist ringförmig ausgebildet und weist acht Fenster mit je einer darin angeordneten Kugel auf.

Die Kugellaufbahnen 15 des Gelenkaußenteils 10 und des Gelenkinnenteils 20 liegen einander paarweise gegenüber und bilden je ein Kugellaufbahnpaar, in dem je eine Kugel geführt wird.

Das Gelenkaußenteil 10 und das Gelenkinnenteil 20 weisen je zwei Gruppen von Kugellaufbahnen 15 auf, die alternierend angeordnet sind. Eine erste Gruppe von Kugellaufbahnen 15_{α} mit einem Schrägungswinkel α und eine zweite Gruppe von Kugellaufbahnen 15_{β} mit einem Schrägungswinkel β. Der Schrägungswinkel ist der Winkel, unter dem eine senkrechte Projektion der Kugellaufbahn in eine Ebene, in der die Drehachse liegt (hier die Zeichenebene), die Drehachse schneidet.

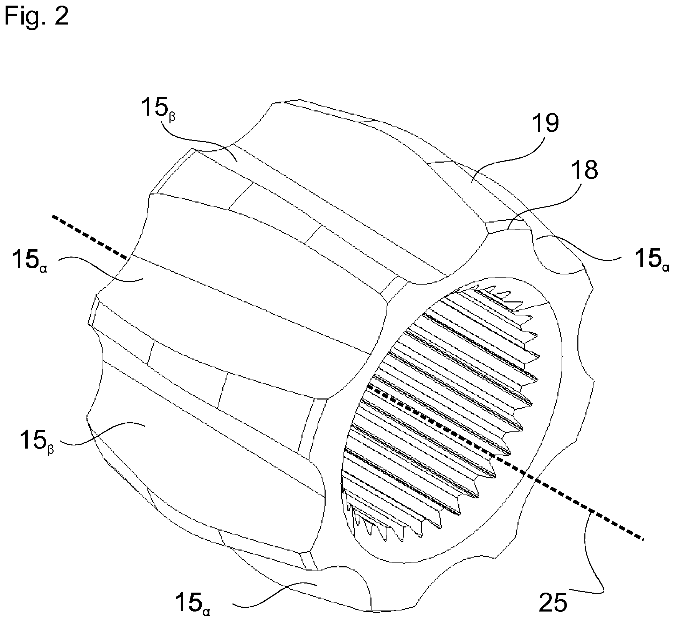

Zur Verdeutlichung der Anordnung der Kugellaufbahnen 15_{α}, 15_{β} ist in Fig. 2 nochmal ein Gelenkinnenteil 20 eines erfindungsgemäßen Kugelverschiebegelenks 1 gezeigt. Wie oben beschrieben umfasst das Gelenkinnenteil 20 acht Kugellaufbahnen 15, wobei sich vier Kugellaufbahnen 15_{α} einer ersten Gruppe und vier Kugellaufbahnen 15_{β} einer zweiten Gruppe jeweils abwechseln. Die Kugellaufbahnen 15_{α}, 15_{β} der ersten und der zweiten Gruppe unterscheiden sich durch ihren Schrägungswinkel α und β, den sie jeweils mit der Drehachse 25 einschließen. Es gilt erfindungsgemäß für die Beträge der Schrägungswinkel: α<β, sowie 1 > α/β ≥ 0,1.

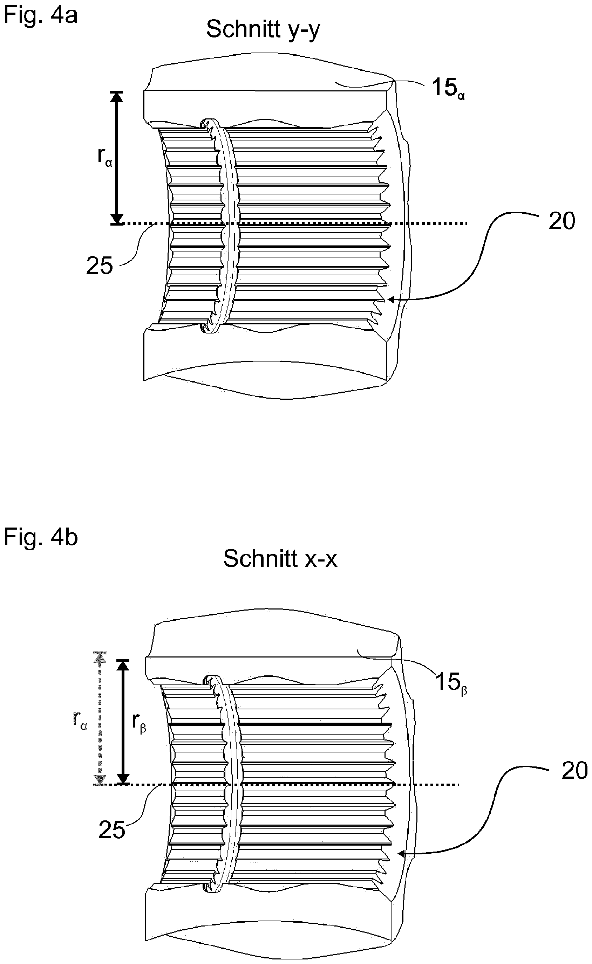

Zur weiteren Veranschaulichung vorteilhafter Ausgestaltungen der Erfindung, insbesondere von Merkmalen der Kugellaufbahnen 15 zeigen die Figuren 4-5 Projektionen und Schnitte durch Kugellaufbahnen 15 eines (stilisierten) Gelenkinnenteils 20. Sämtliche Merkmale der beschriebenen Kugellaufbahnen 15 beziehen sich in äquivalenter Weise auf die entsprechenden Kugellaufbahnen 15 eines Gelenkaußenteils 10, welche mit den beschriebenen Kugellaufbahnen 15 des Gelenkinnenteils 20 Kugellaufbahnpaare (s.o.) bilden.

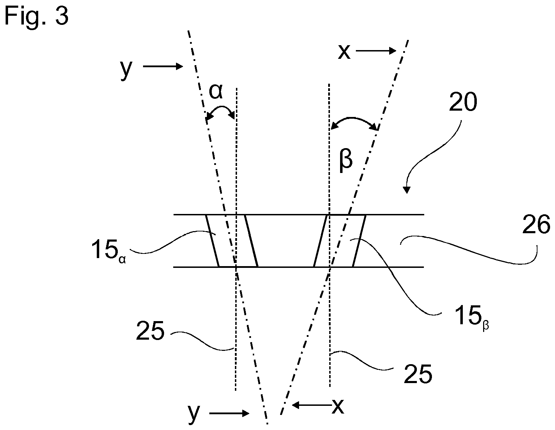

Fig. 3 zeigt eine Aufsicht und Projektion benachbarter Kugellaufbahnen 15_{α}, bzw. 15_{β} eines Gelenkinnenteils 20. Die Kugellaufbahnen 15_{α}, 15_{β} sind auf eine Zylinderfläche 26 um die Drehachse 25 projiziert. Auch Projektionen der jeweiligen Drehachse 25 auf die Zylinderfläche 26 sind gezeigt. Die beiden Kugellaufbahnen 15_{α}, 15_{β} unterscheiden sich in Bezug auf das Vorzeichen und den Betrag des Schrägungswinkels α und β zur Projektion der jeweiligen Drehachse 25. Zur Verdeutlichung der jeweiligen Schrägungswinkel ist in Fig. 3 eine Achse y-y eingezeichnet, die entlang der Kugellaufbahn 15_{α} verläuft und den Schrägungswinkel α mit der Drehachse 25 einschließt. Entsprechend ist eine Achse x-x eingezeichnet, die entlang der Kugellaufbahn 15_{β} verläuft und den Schrägungswinkel β mit der Drehachse 25 einschließt.

Die Fig. 4a und 4b zeigen jeweils Schnitte entlang der Achse y-y bzw. entlang der Achse x-x um weitere mögliche Ausgestaltungen von Kugellaufbahnen 15 zu illustrieren.

Fig. 4a zeigt einen Schnitt entlang der Achse y-y durch eine Kugellaufbahn 15_{α}, wie sie Fig. 3 zu entnehmen ist. Fig. 4b zeigt einen Schnitt entlang der Achse x-x durch eine Kugellaufbahn 15_{β}, wie sie Fig. 3 zu entnehmen ist. Die Kugellaufbahn 15_{α} gehört zu einer ersten Gruppe Kugellaufbahnen 15_{α}, die alle einen übereinstimmenden Schrägungswinkel mit dem Betrag α mit der zugehörigen Drehachse 25 einschließen. Der minimale Radialabstand der Kugellaufbahnen 15_{α} der ersten Gruppe zur jeweiligen Drehachse 25 ist r_{α}. Die Kugellaufbahn 15_{β} gehört zu einer zweiten Gruppe Kugellaufbahnen 15_{β}, die alle einen übereinstimmenden Schrägungswinkel mit dem Betrag β mit der zugehörigen Drehachse 25 einschließen. Der minimale Radialabstand der Kugellaufbahnen 15_{β} der zweiten Gruppe zur jeweiligen Drehachse 25 ist r_{β}. Für die Beträge der Schrägungswinkel gilt: 1> α / β ≥ 0,075 und für die Radialabstände gilt: r_{α} > r_{β}.

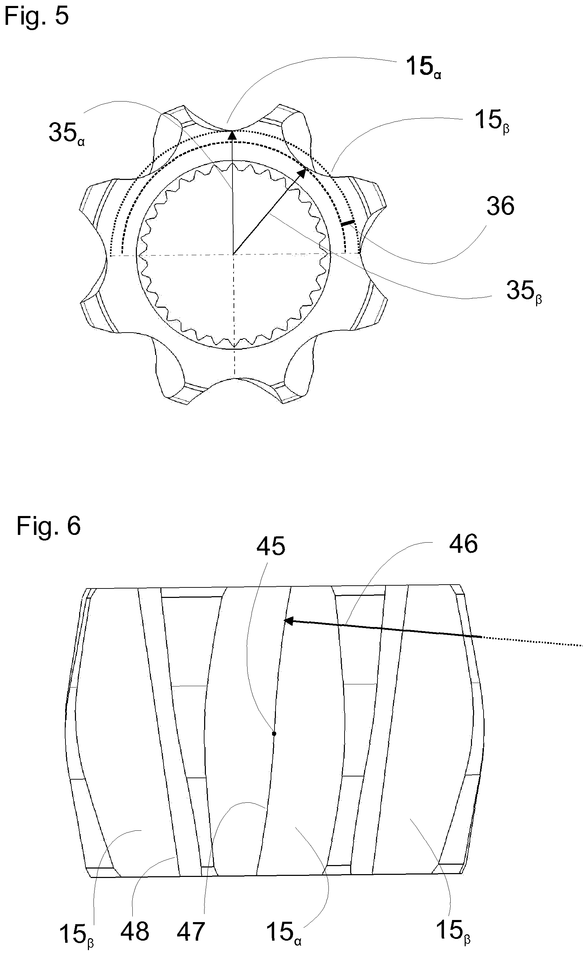

Fig. 5 zeigt einen Querschnitt einer bevorzugten Variante eines Gelenkinnenteils des erfindungsgemäßen Kugelverschiebegelenks, in welcher der minimale, erste Radialabstand r_{α} der ersten Gruppe 15_{α} größer ist als der minimale, zweite Radialabstand r_{β} der zweiten Gruppe 15_{β}. Es gilt also r_{α} > r_{β}, wobei für die Beträge der Schrägungswinkel gilt: α < β und 1> α / β ≥ 0,075 Der in Fig. 5 aufgezeigte Radialsprung 36 des minimalen Radialabstandes ermöglicht es, das Gelenkvolumen effektiver zu nutzen, zudem ergibt sich aufgrund des Radialsprungs 36 eine unterschiedliche Einleitung der Kräfte in der jeweiligen Gruppe 15_{α}, bzw. 15_{β}, was vorteilhaft bei der konstruktiven Auslegung der Bahnen genutzt werden kann. So werden Kugellaufbahnen mit geringerem Schrägungswinkel stärker belastet. Aufgrund des Radialsprungs 36 ist es möglich, bei Kugellaufbahnen der Gruppe 15a die durch die geringere Schrägung bewirkte Belastung dadurch zu kompensieren, dass der Radialabstand der zugehörigen Kugellaufbahnen vergrößert ist Somit wird das Verschiebegelenk insgesamt belastbarer.

Fig. 6 zeigt eine Projektion von drei Kugellaufbahnen, die beiden äußeren Kugellaufbahnen weisen einen gradlinigen Verlauf 48, die zwischen den beiden liegende Kugellaufbahn (mittlere Kugellaufbahn) weist einen gekrümmten, S-förmigen Verlauf auf. Der S-förmige Verlauf ist durch einen Wendepunkt 1. Ordnung 45 gekennzeichnet. Der gekrümmte, S-förmige Verlauf 47 der Kugellaufbahnen ist ausschließlich in der ersten Gruppe, mit dem Schrägungswinkel α ausgebildet, wohingegen der gradlinige Verlauf ausschließlich in der zweiten Gruppe ausgebildet ist. Der S-förmige Verlauf ist dadurch gekennzeichnet, dass wenigstens ein Drittel des Gesamtverlaufs durch einen konstanten Krümmungsradius 46 definiert ist, wobei das Verhältnis zwischen dem ersten Schrägungswinkel α (alpha) und dem Krümmungsradius in einem Bereich zwischen 0,0001 und 1 liegt. Der Krümmungsradius ist in Fig.6 schematisch durch einen Pfeil dargestellt, wobei der gestrichelte Teil des Pfeiles andeuten soll, dass der Krümmungsradius eigentlich größer als eingezeichnet ist.

### Bezugszeichenliste

- 1: Kugelverschiebegelenk
- 10: Gelenkaußenteil
- 11: Zapfen
- 12: Innenumfang
- 13: Innenfläche
- 15: Kugellaufbahn
- 18: Außenumfang
- 19: Außenfläche
- 20: Gelenkinnenteil
- 25: Drehachse
- 26: Zylinderfläche
- 30: Käfig
- 35: Radialabstand
- 36: Radialsprung
- 45: Wendepunkt 1. Ordnung
- 46: Krümmungsradius
- 47: Kugellaufbahnen mit gekrümmtem S-förmigem Verlauf
- 48: Kugellaufbahnen mit geradem Verlauf

## Patentansprüche

1. Kugelverschiebegelenk (1), umfassend: ein Gelenkaußenteil (10) mit an einem Innenumfang (12) ausgebildeten geschrägten Kugellaufbahnen (15), welche um eine Drehachse (25) des Gelenkaußenteils (10) angeordnet sind, ein Gelenkinnenteil (20) mit an einem Außenumfang (18) ausgebildeten geschrägten Kugellaufbahnen (15), welche um eine Drehachse (25) des Gelenkinnenteils (20) angeordnet sind, wobei Kugellaufbahnen (15) des Gelenkaußenteils (10) und des Gelenkinnenteils (20) einander paarweise gegenüberliegen und jeweils entgegengesetzte Schrägungswinkel aufweisen, jeweils eine Kugel je Kugellaufbahnpaar, und einen Käfig (30), der zwischen dem Gelenkaußenteil (10) und dem Gelenkinnenteil (20) angeordnet ist und Fenster aufweist, in denen die Kugeln aufgenommen sind, wobei das Gelenkaußenteil (10) und das Gelenkinnenteil (20) jeweils mindestens zwei Gruppen von geschrägten Kugellaufbahnen (15) aufweisen, wobei die Gruppen sich in Bezug auf den Betrag des Schrägungswinkels zu der jeweiligen Drehachse (25) unterscheiden, dadurch gekennzeichenet, dass eine erste Gruppe von Kugellaufbahnen (15_{α}) einen Schrägungswinkel α (alpha) mit der jeweiligen Drehachse (25) einschließen, sowie eine zweite Gruppe von Kugellaufbahnen (15_{β}) einen Schrägungswinkel β (beta) mit der jeweiligen Drehachse (25) einschließen, wobei für die Beträge gilt α < β (alpha kleiner beta) und die Kugellaufbahnen (15_{α}) der ersten Gruppe einen identischen ersten, minimalen Radialabstand (r_{α}, 35_{α}) zur jeweiligen Drehachse (25) und die Kugellaufbahnen (15_{β}) der zweiten Gruppe einen identischen zweiten, minimalen Radialabstand (r_{β}, 35_{β}) zur jeweiligen Drehachse (25) aufweisen und sich der erste (r_{α}, 35_{α}) und zweite Radialabstand (r_{β}, 35_{β}) im Betrag unterscheiden.

2. Kugelverschiebegelenk (1) nach Anspruch 1, wobei ferner für die Beträge gilt: 1> α / β ≥ 0,075
bevorzugt gilt: 1 > α / β ≥ 0,1 .

3. Kugelverschiebegelenk (1) nach einem der vorhergehenden Ansprüche, wobei der erste Radialabstand (r_{α}, 35_{α}) größer ist als der zweite Radialabstand (r_{β}, 35_{β})

4. Kugelverschiebegelenk (1) nach einem der vorhergehenden Ansprüche, wobei die Kugellaufbahnen (15) der ersten und/oder zweiten Gruppe jeweils in einer Tangentialebene einer Zylinderfläche um die jeweilige Drehachse (25) liegend angeordnet sind, bevorzugt durch eine Tangente an eine Zylinderfläche um die jeweilige Drehachse (25) definiert ist.

5. Kugelverschiebegelenk (1) nach einem der vorhergehenden Ansprüche, wobei der Betrag der Differenz (36) aus dem minimalsten Radialabstand der ersten Gruppe und dem minimalsten Radialabstand der zweiten Gruppe zwischen 0,01 mm und 10,00 mm, bevorzugt zwischen 0,10 mm und 1,00 mm liegt.

6. Kugelverschiebegelenk (1) nach einem der vorhergehenden Ansprüche, wobei der Schrägungswinkel β (Beta) so gewählt ist, dass er wenigstens einem halben Beugewinkel entspricht, um den das Gelenkaußenteil zu dem Gelenkinnenteil gelenkig verschwenkbar ist.

7. Kugelverschiebegelenk (1) nach einem der vorhergehenden Ansprüche, wobei wenigstens die Anzahl der Kugellaufbahnen (15_{α}) der ersten Gruppe gleich der Anzahl der Kugellaufbahnen (15_{β}) der zweiten Gruppe ist.

8. Kugelverschiebegelenk (1) nach einem der vorhergehenden Ansprüche, wobei in Umfangsrichtung das Vorzeichen des Schrägungswinkels von Kugellaufbahn (15) zu Kugellaufbahn (15) wechselt.

9. Kugelverschiebegelenk (1) nach einem der vorhergehenden Ansprüche, wobei die Kugellaufbahnen (15) wenigstens einer Gruppe einen geradlinigen Verlauf aufweisen.

10. Kugelverschiebegelenk (1) nach dem vorhergehenden Anspruch, wobei ausschließlich die Kugellaufbahnen (15) der zweiten Gruppe einen geradlinigen Verlauf aufweisen.

11. Kugelverschiebegelenk (1) nach einem der vorhergehenden Ansprüche, wobei die Kugellaufbahnen (15) wenigstens einer Gruppe einen gekrümmten Verlauf (47) mit einem Wendepunkt 1. Ordnung (45) aufweisen.

12. Kugelverschiebegelenk (1) nach dem vorhergehenden Anspruch, wobei der gekrümmte Verlauf (47) punktsymmetrisch zum Wendepunkt 1. Ordnung (45) ist.

13. Kugelverschiebegelenk (1) nach einem der beiden vorhergehenden Ansprüche, wobei der gekrümmte Verlauf (47) abschnittsweise, bevorzugt über wenigstens ein Viertel, noch bevorzugter über wenigstens ein Drittel seines Gesamtverlaufs durch einen konstanten Krümmungsradius (46) definiert ist.

14. Kugelverschiebegelenk (1) nach dem vorhergehenden Anspruch, wobei das Verhältnis aus dem Schrägungswinkel α (alpha) und dem Krümmungsradius in einem Bereich zwischen 0,0001 und 1 liegt.

15. Kugelverschiebegelenk (1) nach einem der beiden vorhergehenden Ansprüche, wobei die Kugellaufbahnen einen zu ihrer Verlaufsrichtung senkrechten Querschnitt in Parabelform aufweisen.

16. Kugelverschiebegelenk (1) nach einem der vorhergehenden Ansprüche, wobei die Anzahl der Kugeln drei oder mehr, bevorzugt 6 oder 8 beträgt.

## Claims

1. Constant velocity joint (1), comprising: an outer joint part (10) having angular bearing races (15) formed on an inner circumference (12) that are arranged around an axis of rotation (25) of the outer joint part (10); an inner joint part (20) having angular bearing races (15) formed on an outer circumference (18) that are arranged around an axis of rotation (25) of the inner joint part (20), wherein bearing races (15) of the outer joint part (10) and of the inner joint part (20) are located opposite one another in pairs and each have helix angles opposing each other - one bearing each per bearing race pair; and a retainer (30) that is arranged between the outer joint part (10) and the inner joint part (20) and has windows in which the bearings are accommodated; wherein the outer joint part (10) and the inner joint part (20) each have at least two groups of angular bearing races (15), wherein the groups differ with respect to the value of the helix angle to the respective axis of rotation (25); **characterized in that** a first group of bearing races (15_{α}) includes a helix angle α (alpha) having the corresponding axis of rotation (25), and a second group of bearing races (15_{β}) includes a helix angle β (beta) having the corresponding axis of rotation (25), wherein, for the values, α < β (alpha less than beta) applies, and the bearing races (15_{α}) of the first group are at an identical first minimum radial distance (r_{α}, 35_{α}) from the corresponding axis of rotation (25), and the bearing races (15_{β}) of the second group are at an identical second minimum radial distance (r_{β}, 35_{β}) from the corresponding axis of rotation (25), and the first (r_{α}, 35_{α}) and second radial distances (r_{β}, 35_{β}) differ in value.

2. Constant velocity joint (1) according to claim 1, wherein, furthermore, the following inequality applies for the values: 1> α / β ≥ 0.075
and, preferably, the following applies: 1 > α / β ≥ 0.1.

3. Constant velocity joint (1) according to one of the preceding claims, wherein the first radial distance (r_{α}, 35_{α}) is larger than the second radial distance (r_{β}, 35_{β}).

4. Constant velocity joint (1) according to one of the preceding claims, wherein the bearing races (15) of the first and/or second group are each arranged lying within a tangential plane of a cylindrical surface around the respective axis of rotation (25) - preferably, defined by a tangent to a cylindrical surface around the respective axis of rotation (25).

5. Constant velocity joint (1) according to one of the preceding claims, wherein the value of the difference (36) between the least radial distance of the first group and the least radial distance of the second group is between 0.01 mm and 10.00 mm - preferably, between 0.10 mm and 1.00 mm.

6. Constant velocity joint (1) according to one of the preceding claims, wherein the helix angle β (Beta) is chosen such that it corresponds to at least one half of a deflection angle, so that the outer joint part can be pivotably joined to the inner joint part.

7. Constant velocity joint (1) according to one of the preceding claims, wherein at least the number of bearing races (15_{α}) of the first group is equal to the number of bearing races (15_{β}) of the second group.

8. Constant velocity joint (1) according to one of the preceding claims, wherein the sign of the helix angle changes in the circumferential direction from bearing race (15) to bearing race (15).

9. Constant velocity joint (1) according to one of the preceding claims, wherein the bearing races (15) of at least one group have a linear course,

10. Constant velocity joint (1) according to the preceding claim, wherein only the bearing races (15) of the second group have a linear course.

11. Constant velocity joint (1) according to one of the preceding claims, wherein the bearing races (15) of at least one group have a curved course (47) having an inflection point of the first order (45).

12. Constant velocity joint (1) according to the preceding claim, wherein the curved course (47) is point symmetrical to the inflection point of the first order (45).

13. Constant velocity joint (1) according to one of the two preceding claims, wherein the curved course (47) is partially - preferably, over at least one fourth, and, more preferably, over at least one third of its entire course - defined by a constant radius of curvature (46).

14. Constant velocity joint (1) according to the preceding claim, wherein the ratio of the helix angle α (alpha) to the radius of curvature is in a range between 0.0001 and 1.

15. Constant velocity joint (1) according to one of the two preceding claims, wherein the bearing races have a parabolic cross-section perpendicular to their running direction.

16. Constant velocity joint (1) according to one of the preceding claims, wherein the number of bearings is three or more - preferably, 6 or 8.

## Revendications

1. Accouplement glissant à billes (1), comprenant une partie extérieure (10) d'accouplement pourvue de chemins de roulement de billes inclinés (15) qui sont formés sur une circonférence intérieure (12), qui sont disposés autour d'un axe de rotation (25) de la partie extérieure (10) d'accouplement, une partie intérieure (20) d'accouplement pourvue de chemins de roulement de billes inclinés (15) qui sont formés sur une circonférence extérieure (18) et qui sont disposés autour d'un axe de rotation (25) de la partie intérieure (20) d'accouplement, les chemins de roulement de billes (15) de la partie extérieure (10) d'accouplement et de la partie intérieure (20) d'accouplement formant des angles d'inclinaison mutuellement opposés et inverses, par paires, une bille pour chaque paire de chemins de roulement de billes, et une cage (30), qui est disposée entre la partie extérieure (10) d'accouplement et la partie intérieure (20) d'accouplement et qui présente des fenêtres, dans lesquelles les billes sont logées, la partie extérieure (10) d'accouplement et la partie intérieure (20) d'accouplement présentant chacune au moins deux groupes de chemins de roulement de billes inclinés (15), les groupes différant par la valeur de l'angle d'inclinaison par rapport à l'axe de rotation respectif (25), **caractérisé en ce qu'**un premier groupe de chemins de roulement de billes (15_{α}) forme un angle d'inclinaison α (alpha) avec l'axe de rotation respectif (25) et **en ce qu'**un deuxième groupe de chemins de roulement de billes (15_{β}) forme un angle d'inclinaison β (bêta) avec l'axe de rotation respectif (25), α < β (alpha inférieur à bêta) étant d'application pour les valeurs et les chemins de roulement de billes (15_{α}) du premier groupe présentant une même première distance radiale minimale (r_{α}, 35_{α}) par rapport à l'axe de rotation respectif (25) et les chemins de roulement de billes (15_{β}) du deuxième groupe présentant une même seconde distance radiale minimale (r_{β}, 35_{β}) par rapport à l'axe de rotation respectif (25) et les première (r_{α}, 35_{α}) et seconde (r_{β}, 35_{β}) distances radiales se distinguant par la valeur.

2. Accouplement glissant à billes (1) selon la revendication 1, dans lequel, en outre, pour les valeurs :
1 > α / β ≥ 0,075 est d'application,
de préférence : 1 > α / β ≥ 0,1 est d'application.

3. Accouplement glissant à billes (1) selon l'une quelconque des revendications précédentes, dans lequel la première distance radiale (r_{α}, 35_{α}) est supérieure à la seconde distance radiale (r_{β}, 35_{β})

4. Accouplement glissant à billes (1) selon l'une quelconque des revendications précédentes, dans lequel les chemins de roulement de billes (15) du premier et/ou du deuxième groupe sont disposés respectivement dans un plan tangentiel d'une surface cylindrique située autour de l'axe de rotation respectif (25), de préférence défini par une tangente à une surface cylindrique autour de l'axe de rotation respectif (25).

5. Accouplement glissant à billes (1) selon l'une quelconque des revendications précédentes, dans lequel la valeur de la différence (36) entre la distance radiale minimale du premier groupe et la distance radiale minimale du deuxième groupe est comprise entre 0,01 mm et 10,00 mm, de préférence entre 0,10 mm et 1,00 mm.

6. Accouplement glissant à billes (1) selon l'une quelconque des revendications précédentes, dans lequel l'angle d'inclinaison β (bêta) est choisi de manière à correspondre au moins à la moitié d'un angle de flexion, sur lequel la partie extérieure d'accouplement peut pivoter de manière articulée par rapport à la partie intérieure d'accouplement.

7. Accouplement glissant à billes (1) selon l'une quelconque des revendications précédentes, dans lequel au moins le nombre de chemins de roulement de billes (15α) du premier groupe est identique au nombre de chemins de roulement de billes (15_{β}) du deuxième groupe.

8. Accouplement glissant à billes (1) selon l'une quelconque des revendications précédentes, dans lequel, dans la direction circonférentielle, le signe de l'angle d'inclinaison change de chemin de roulement de billes (15) en chemin de roulement de billes (15).

9. Accouplement glissant à billes (1) selon l'une quelconque des revendications précédentes, dans lequel les chemins de roulement de billes (15) d'au moins un groupe présentent une allure rectiligne.

10. Accouplement glissant à billes (1) selon la revendication précédente, dans lequel seuls les chemins de roulement de billes (15) du deuxième groupe présentent une allure rectiligne.

11. Accouplement glissant à billes (1) selon l'une quelconque des revendications précédentes, dans lequel les chemins de roulement de billes (15) d'au moins un groupe présentent une allure courbe (47) avec un point d'inflexion de 1er ordre (45).

12. Accouplement glissant à billes (1) selon la revendication précédente, dans lequel l'allure courbe (47) est disposée avec une symétrie ponctuelle par rapport au point d'inflexion de 1er ordre (45).

13. Accouplement glissant à billes (1) selon l'une quelconque des deux revendications précédentes, dans lequel l'allure courbe (47) est définie par parties, de préférence sur au moins un quart, plus préférablement sur au moins un tiers, de la totalité de son allure, par un rayon de courbure constant (46).

14. Accouplement glissant à billes (1) selon la revendication précédente, dans lequel le rapport de l'angle d'inclinaison α (alpha) et du rayon de courbure se situe dans une plage comprise entre 0,0001 et 1.

15. Accouplement glissant à billes (1) selon l'une quelconque des deux revendications précédentes, dans lequel les chemins de roulement de billes présentent une section transversale, perpendiculaire à leur direction d'allure, sous forme parabolique.

16. Accouplement glissant à billes (1) selon l'une quelconque des revendications précédentes, dans lequel le nombre des billes est de trois ou plus, de préférence 6 ou 8.
